Europäisches Patentamt

(19) European Patent Office

Office européen des brevets

(11) Numéro de publication : **0 086 125 B1**

(12) **FASCICULE DE BREVET EUROPÉEN**

(45) Date de publication du fascicule du brevet :
21.01.87

(51) Int. Cl.⁴ : **G 01 S 7/34**

(21) Numéro de dépôt : **83400125.7**

(22) Date de dépôt : **19.01.83**

(54) **Dispositif de commande de gain à taux de fausse alarme constant dans une chaîne de réception radar.**

(30) Priorité : **29.01.82 FR 8201455**

(43) Date de publication de la demande :
**17.08.83 Bulletin 83/33**

(45) Mention de la délivrance du brevet :
**21.01.87 Bulletin 87/04**

(84) Etats contractants désignés :
**DE GB IT NL**

(56) Documents cités :
**FR-A- 2 192 726**
**US-A- 3 832 710**

(73) Titulaire : **THOMSON-CSF**
**173, Boulevard Haussmann**
**F-75379 Paris Cedex 08 (FR)**

(72) Inventeur : **Moreau, André**
**THOMSON-CSF SCPI 173, bld Haussmann**
**F-75379 Paris Cedex 08 (FR)**
Inventeur : **Baril, Michel**
**THOMSON-CSF SCPI 173, bld Haussmann**
**F-75379 Paris Cedex 08 (FR)**

## Description

La présente invention concerne un dispositif de commande de gain à taux de fausse alarme constant dans une chaîne de réception radar. Il permet d'obtenir pour la chaîne de réception radar un gain variable en hyperfréquence, tout en conservant un niveau de bruit constant en sortie.

Le récepteur est l'élément le plus complexe du radar. Il lui incombe l'amplification et le traitement du signal radar, et sa sensibilité doit être très grande. Il doit amplifier ce signal radar reçu dans de très grandes proportions mais sans le déformer. En outre il effectue le filtrage du signal et tous les autres traitements adaptés à l'information à obtenir. Sa réalisation doit donc être soignée pour réduire au minimum les perturbations dues au bruit accompagnant le signal et dont une partie naît précisément dans les circuits de réception. Etant donné les problèmes de non-linéarité ou d'intermodulation liés à la dynamique des récepteurs, il est conseillé d'éviter de saturer la chaîne de réception, notamment en cas de signaux forts, comme des échos proches par exemple.

Généralement, une solution à ce risque de saturation est l'atténuation du signal en hyperfréquence. Selon une première méthode, on place un atténuateur devant le dispositif amplificateur hyperfréquence de la chaîne de réception. Vue de ce dispositif, l'impédance d'entrée ne varie pas et le gain de la chaîne reste donc constant mais l'inconvénient de cette méthode réside dans la dégradation du facteur de bruit entraînant une perte de la sensibilité du récepteur.

Selon une seconde méthode, on fait varier le gain de l'étage hyperfréquence de la chaîne de réception, en utilisant par exemple un transistor à effet de champ double grille ; ceci présente également un inconvénient, le niveau de bruit varie en sortie de la chaîne de réception entraînant une variation du taux de fausse alarme.

Selon une troisième méthode, décrite notamment dans le document de brevet US-A-3 832 710, on place un atténuateur après le dispositif amplificateur hyperfréquence de la chaîne de réception. Le fait que la puissance de bruit appliquée à l'entrée du dispositif subisse une atténuation variable dans cet atténuateur est alors compensé par l'apport d'une puissance de bruit auxiliaire réglée de façon telle que la puissance de bruit en sortie du dispositif soit constante et égale à la puissance de bruit en entrée.

Ce dispositif a pour inconvénient de nécessiter deux réglages distincts, un pour l'atténuation de la puissance de bruit en entrée, un autre pour l'atténuation de la puissance de bruit auxiliaire.

La présente invention telle que définie dans la revendication 1 permet de simplifier le dispositif précédent, de façon à ne plus avoir qu'un seul réglage, pour l'atténuation de la puissance de bruit en entrée.

Les caractéristiques et avantages de l'invention apparaîtront dans la description suivante illustrée par les différentes figures représentant :

la figure 1   une chaîne de réception radar comprenant un dispositif de commande de gain selon l'invention,

la figure 2   le schéma équivalent d'une diode.

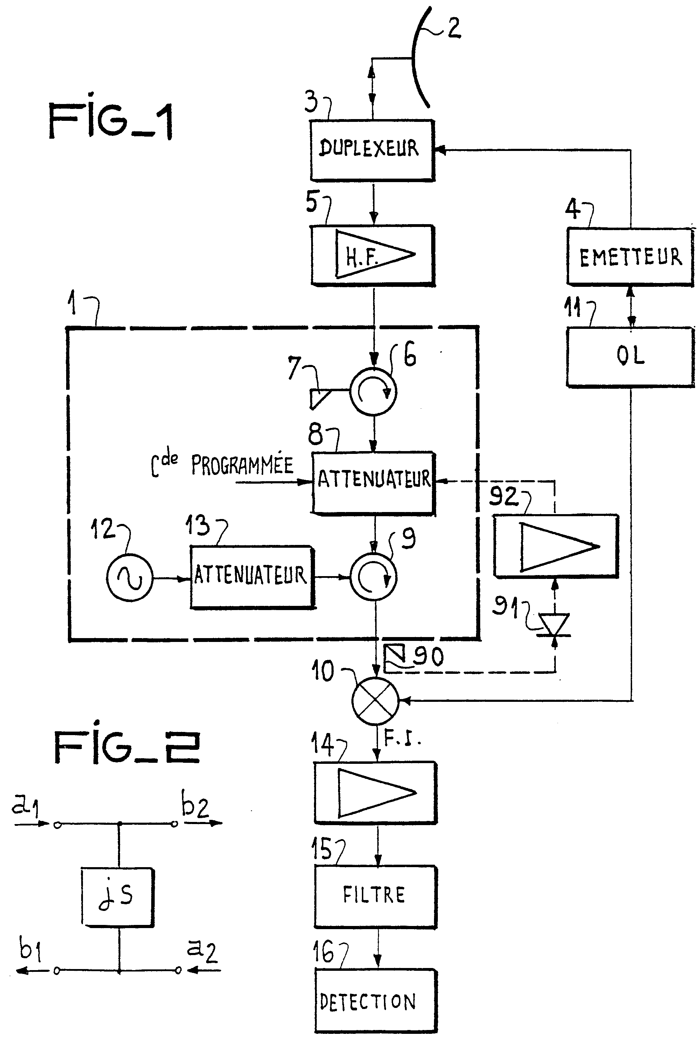

La figure 1 représente une chaîne de réception radar comprenant un dispositif 1 de commande de gain de la chaîne hyperfréquence, selon l'invention. Cette chaîne comporte tout d'abord une antenne radar d'émission-réception 2 reliée à un duplexeur 3 orientant le signal émis par l'émetteur 4 vers l'antenne et le signal reçu par celle-ci vers la chaîne de réception hyperfréquence. Cette chaîne est constituée par un circuit amplificateur hyperfréquence 5, permettant de fixer les caractéristiques de bruit interne du récepteur. Le dispositif 1, objet de l'invention est relié à la sortie de cet amplificateur 5. Il comprend tout d'abord un circuit isolateur 6, dont une première voie est connectée à l'amplificateur 5 hyperfréquence, dont une deuxième voie est fermée par une charge 7 et dont la troisième voie est reliée à l'entrée d'un atténuateur 8 variable réactif, à diodes par exemple, commandé généralement à partir d'un circuit programmé dans la chaîne de traitement du signal radar. Cet atténuateur 8 peut être commandé également par une boucle, représentée en pointillés sur la figure 1, insérée dans la chaîne de réception et qui, associée à un détecteur, assure une limitation du niveau de sortie. Cette boucle comprend tout d'abord un coupleur directif 90 qui prélève une fraction du signal circulant dans la chaîne hyperfréquence. Lorsque le niveau de ce signal qui est détecté dans un circuit détecteur 91, une diode par exemple, est supérieur à un certain seuil, il passe dans un circuit amplificateur 92 et il commande alors l'atténuateur 8. Si le niveau du signal est inférieur à ce seuil déterminé, il n'y a pas de commande d'atténuation.

Cet atténuateur 8 doit avoir une réactance variable commandable et peut être réalisé de façon connue à partir de diodes montées en shunt ou en série dans une ligne hyperfréquence. Il est relié en sortie à une première voie d'un circuit isolateur de sortie 9, dont une seconde voie aboutit à un dispositif mélangeur 10 qui sépare l'étage hyperfréquence déjà décrit de la chaîne de réception de l'étage moyenne fréquence, travaillant à la fréquence intermédiaire délivrée par l'oscillateur local 11 relié à l'émetteur 4. La troisième voie du circulateur de sortie 9 est connectée à une source de bruit 12, qui peut être une diode avalanche par exemple, et dont le niveau de bruit est ajusté à partir d'un circuit atténuateur d'appoint 13.

Cet ajustement du niveau de bruit généré par la source de bruit 12 est nécessaire pour les deux raisons suivantes. Tout d'abord le rôle du circulateur 9 étant d'éviter toute perturbation due à une réflexion de signal venant du mélangeur 10 et passant dans la troisième voie du circulateur, celle-ci doit être connectée à une source 12 se comportant comme une charge adaptée absorbant un tel signal réfléchi. Ensuite, la source de bruit 12, réalisée notamment par une diode avalanche, ne génère généralement pas la puissance de bruit voulue, mais souvent une puissance supérieure, aussi doit-elle être atténuée par un atténuateur ajustable.

Pour compléter la chaîne de réception au-delà du circuit mélangeur 10, ce dernier est connecté à un circuit amplificateur 14 à fréquence intermédiaire F.I. suivi d'un filtre 15 avant détection du signal dans un circuit 16 qui opère le passage du signal F.I. au signal vidéo-fréquence.

Le fonctionnement du dispositif de commande de gain 1 selon l'invention est le suivant. En l'absence de signal de commande sur l'atténuateur à diodes 8, la puissance de bruit $P_S$ engendré par la source de bruit 12 est dirigée, au moyen du circulateur de sortie 9, vers le circuit circulateur d'entrée 6 puis est absorbée par la charge 7 placée sur la seconde voie du circulateur 6 comme cela a été déjà décrit. Dans ce cas, le bruit transmis en sortie du dispositif de commande 1 est seulement le bruit, de puissance $P_B$, existant à l'entrée de ce dispositif 1.

Par contre, en présence d'un signal de commande sur l'atténuateur à diodes 8 en vue d'une limitation, cet atténuateur réactif présente un coefficient de réflexion $\Gamma$, correspondant à une atténuation de coefficient $\alpha$. Dans ce cas-là, le bruit de puissance $P_B$ à l'entrée du dispositif 1 est transmis et atténué par l'atténuateur 8 avec le coefficient d'atténuation $\alpha$, de sorte que la puissance de bruit ainsi transmise est

$$P_A = P_B \cdot \alpha^2 \, ,$$

et le bruit généré par la source 12 est renvoyé par cet atténuateur 8 avec le coefficient de réflexion $\Gamma$ de sorte que la puissance de bruit ainsi réfléchie est

$$P_R = P_S \cdot \Gamma^2 \, .$$

Ainsi, la puissance de bruit en sortie du dispositif de commande 1 selon l'invention est la somme de la puissance de bruit transmise $P_A$ et de la puissance de bruit réfléchie $P_R$ par l'atténuateur à diodes 8 :

$$P_A + P_R = P_B \cdot \alpha^2 + P_S \cdot \Gamma^2 \, .$$

Or, les diodes constituant l'atténuateur réactif 8 se comportent comme des susceptances S, la figure 2 représentant schématiquement le circuit équivalent d'une telle diode. Ainsi, si $a_1$ est la puissance d'un signal traversant une diode dans le sens direct, $b_2$ celle du signal transmis par elle, $b_1$ celle du signal réfléchi et $a_2$ celle d'un signal la traversant dans le sens inverse, on peut écrire les puissances $a_1$ et $b_1$ en fonction des puissances $a_2$ et $b_2$, sous forme matricielle suivante :

$$\begin{vmatrix} a_1 \\ b_1 \end{vmatrix} = \begin{vmatrix} 1 + j\dfrac{S}{2} & j\dfrac{S}{2} \\ -j\dfrac{S}{2} & 1 - j\dfrac{S}{2} \end{vmatrix} \begin{vmatrix} b_2 \\ a_2 \end{vmatrix}$$

avec $j$ = nombre complexe tel que $j^2 = -1$ et S étant la susceptance représentant la diode.

Si on admet qu'une diode placée dans une ligne est équivalente à une susceptance perturbant peu la ligne, on peut écrire que l'onde subit un déphasage $\varphi$ introduit par ladite susceptance S, et relié entre eux par la relation $S/2 = \mathrm{tg}\varphi$. On a ainsi introduit artificiellement la longueur électrique de la diode.

En posant $S/2 = \mathrm{tg}\varphi$, on obtient :

$$\begin{vmatrix} a_1 \\ b_1 \end{vmatrix} = \frac{1}{\cos \varphi} \begin{vmatrix} e^{j\varphi} & j \sin \varphi \\ -j \sin \varphi & e^{-j\varphi} \end{vmatrix} \begin{vmatrix} b_2 \\ a_2 \end{vmatrix}$$

Sachant que le coefficient d'atténuation $\alpha$ représente le rapport entre la puissance du signal transmis $b_2$ et celle du signal incident $a_1$ en sens direct :

$$\alpha = \frac{b_2}{a_1} = \cos \varphi \cdot e^{-j\varphi}$$

et que le coefficient de réflexion $\Gamma$ représente le rapport entre la puissance du signal transmis $b_2$ et celle du signal incident $a_2$ en sens inverse :

$$\Gamma = \frac{b_2}{a_2} = \sin\varphi \cdot \exp\left[-j\left(\varphi + \frac{\pi}{2}\right)\right]$$

on en déduit :

$$|\alpha|^2 = \cos^2\varphi \quad \text{et} \quad |\Gamma|^2 = \sin^2\varphi$$

d'où :

$$|\alpha|^2 = 1 - |\Gamma|^2$$

et

$$P_A + P_R = P_B\alpha^2 + P_S\Gamma^2 = P_B(1 - \Gamma^2) + P_S\Gamma^2$$

Dans cette dernière expression de la puissance de bruit en sortie du dispositif de commande 1, on voit que si le bruit généré par la source 12 est ajusté de sorte qu'il a un niveau et une distribution spectrale identiques à ceux du bruit appliqué à l'entrée de l'atténuateur 8, soit : $P_S = P_B$ la puissance de bruit $P_R + P_A$ devient :

$$P_R + P_A = P_B(1 - \Gamma^2) + P_B\Gamma^2 = P_B$$

Autrement dit, pour une atténuation quelconque de coefficient $\alpha$, réalisée par l'atténuateur à diodes 8, la puissance de bruit en sortie du dispositif 1 reste constante et égale à la puissance de bruit en entrée.

Dans un exemple particulier de réalisation, la source de bruit 12 est réalisée par une diode avalanche, dont la puissance de bruit est ajustée au moyen d'un atténuateur d'appoint pour qu'elle soit égale à la puissance de bruit de l'amplificateur hyperfréquence 5, de sorte que le niveau de bruit à l'entrée du mélangeur 10 est indépendant du gain de la chaîne de réception.

Ainsi, vient d'être décrit un dispositif de commande de gain d'une chaîne de réception radar à taux de fausse alarme constant, c'est-à-dire conservant un niveau de bruit constant en sortie.

**Revendications**

1. Dispositif de commande de gain d'une chaîne de réception radar qui est constituée en entrée par un circuit amplificateur hyperfréquence (5) des signaux reçus par l'antenne radar associée (2) et en sortie par un circuit de filtrage (15) de ces signaux et qui comporte en outre un mélangeur (10), un étage moyenne fréquence et une chaîne de traitement du signal radar, lequel dispositif comprend un circuit atténuateur (8) variable et une source de bruit (12) dont le niveau de bruit est ajusté à partir d'un circuit atténuateur d'appoint (13), ledit dispositif étant caractérisé en ce qu'il comporte comme circuit atténuateur (8) un circuit à réactance variable commandée placé en sortie du circuit amplificateur hyperfréquence (5), un circuit isolateur (6) d'entrée qui a une première voie connectée à l'amplificateur hyperfréquence (5), une seconde voie fermée par une charge (7) et une troisième voie reliée à l'entrée du circuit atténuateur (8) à réactance variable commandée, dont la sortie est reliée à une première voie d'un circuit isolateur de sortie (9), qui a une seconde voie reliée au mélangeur (10) aboutissant à l'étage moyenne fréquence de la chaîne de réception radar, et qui a une troisième voie connectée au circuit atténuateur d'appoint (13).

2. Dispositif selon la revendication 1, caractérisé en ce que le circuit atténuateur (8) à réactance variable commandée est commandé à partir d'un circuit programmé dans la chaîne de traitement du signal radar.

3. Dispositif selon la revendication 1, caractérisé en ce que le circuit atténuateur (8) à réactance variable commandée est commandé par une boucle insérée dans la chaîne de réception, et comprenant un coupleur directif (90) prélevant une fraction du signal circulant dans la chaîne pour l'envoyer dans un circuit détecteur (91), lui-même connecté à un circuit amplificateur (92) commandant directement le circuit atténuateur (8).

4. Dispositif selon la revendication 1, caractérisé en ce que le circuit atténuateur (8) est à diodes.

5. Dispositif selon la revendication 1, caractérisé en ce que la source de bruit (12) est constituée par une diode avalanche.

**Claims**

1. Gain control device of a radar reception chain which is constituted, on the input side, by a hyperfrequency amplifier circuit (5) for the signals received by the associated radar antenna (2) and, on the output side, by a filter circuit (15) for these signals, and which further comprises a mixer (10), an intermediate frequency stage and a radar signal processing chain, said device comprising a variable

4

attenuation circuit (8) and a noise source (12) the noise level of which is adjusted by an auxiliary attenuation circuit (13), said device being characterized in that it comprises, as an attenuation circuit (8), a variable controlled reactance circuit placed on the output of the hyperfrequency amplifier circuit (5), an insulating input circuit (6) having a first path connected to the hyperfrequency amplifier (5), a second path closed by a load (7) and a third path connected to the input of the variable controlled reactance attenuation circuit (8) the output of which is connected to a first path of an outpout insulation circuit (9) which has a second path connected to the mixer (10) arriving at the intermediate frequency stage of the radar reception chain, and which has a third path connected to the auxiliary attenuation circuit (13).

2. Device according to claim 1, characterized in that the variable controlled reactance attenuation circuit (8) is controlled by a programmed circuit within the radar signal processing chain.

3. Device according to claim 1, characterized in that the variable controlled reactance attenuation circuit is controlled by a loop inserted in the reception chain, and comprising a directive coupler (90) deriving a fraction of the signal circulating within the chain to transmit it to a detection circuit (91) which is in turn connected to an amplification circuit (92) directly controlling the attenuation circuit (8).

4. Device according to claim 1, characterized in that the attenuation circuit (8) is equipped with diodes.

5. Device according to claim 1, characterized in that the noise source (12) is constituted by an avalanche diode.

### Patentansprüche

1. Verstärkungssteuervorrichtung für eine Radar-Empfangskette, die eingangsseitig durch eine Mikrowellen-Verstärkerschaltung (5) für die von der zugeordneten Radarantenne (2) empfangenen Signale und ausgangsseitig durch eine Filterschaltung (15) für diese Signale gebildet ist sowie ferner einen Mischer (10), eine Zwischenfrequenzstufe und eine Verarbeitungskette für das Radarsignal enthält, wobei die genannte Vorrichtung ferner eine variable Dämpfungsschaltung (8) und eine Rauschquelle (12) enthält, deren Rauschpegel durch eine Hilfs-Dämpfungsschaltung (13) eingestellt wird, wobei die genannte Vorrichtung dadurch gekennzeichnet ist, daß sie als Dämpfungsschaltung (8) eine Schaltung mit gesteuert variabler Reaktanz enthält, welche am Ausgang der Mikrowellen-Verstärkerschaltung (5) angeordnet ist, mit einer Eingangs-Trennschaltung (6), wovon ein erster Kanal an den Mikrowellen-Verstärker (5) angeschlossen ist, ein zweiter Kanal durch eine Last (7) abgeschlossen ist, und ein dritter Kanal mit dem Eingang der Dämpfungsschaltung (8) mit gesteuert variabler Reaktanz angeschlossen ist, deren Ausgang mit einem ersten Kanal einer Ausgangs-Trennstufe (9) verbunden ist, wovon ein zweiter Kanal mit dem Mischer (10) verbunden ist, welcher zu der Zwischenfrequenzstufe der Radar-Empfangskette führt, und wovon ein dritter Kanal mit der Hilfs-Dämpfungsschaltung (13) verbunden ist.

2. Vorrichtung nach Anspruch 1, dadurch gekennzeichnet, daß die Dämpfungsschaltung (8) mit gesteuert variabler Reaktanz durch eine programmierte Schaltung in der Verarbeitungskette für das Radarsignal gesteuert wird.

3. Vorrichtung nach Anspruch 1, dadurch gekennzeichnet, daß die Dämpfungsschaltung (8) mit gesteuert variabler Reaktanz durch eine Schleife gesteuert wird, welche in die Empfangskette eingefügt ist, und mit einem Richtkoppler (90), der einen Bruchteil des Signals abgreift, welches in der Kette fließt, um es einer Detektorschaltung (91) zuzuführen, welche ihrerseits an eine Verstärkerschaltung (92) angeschlossen ist, die die Dämpfungsschaltung (8) direkt steuert.

4. Vorrichtung nach Anspruch 1, dadurch gekennzeichnet, daß die Dämpfungsschaltung (8) mit Dioden arbeitet.

5. Vorrichtung nach Anspruch 1, dadurch gekennzeichnet, daß die Rauschquelle (12) durch eine Lawinenlaufzeitdiode gebildet ist.

5

FIG_1

0 086 125

DUPLEXEUR

H.F.

EMETTEUR

OL

ATTENUATEUR

C$^{de}$ PROGRAMMÉE

ATTENUATEUR

F.I.

FILTRE

DETECTION

FIG_2

$a_1$    $b_2$

$jS$

$b_1$    $a_2$

1